# EUROPEAN PATENT APPLICATION

(11) **EP 4 557 452 A1**
(43) Date of publication of application: **21.05.2025**
(21) Application number: 23839321.9
(22) Date of filing: 29.05.2023
(51) Int. Cl.: H01M 10/54, C22B 1/02, C22B 3/22, C22B 7/00, C22B 15/00

(54) **METHOD FOR RECOVERING VALUABLE MATERIALS FROM LITHIUM ION SECONDARY BATTERIES**

(30) Priority: 13.07.2022 JP 2022112516
(71) Applicant: Dowa Eco-System Co., Ltd., Tokyo 101-0021 (JP)
(72) Inventor: LIU, Changzhi, Tokyo 101-0021 (JP); WATANABE, Ryoei, Tokyo 101-0021 (JP); TAHATA, Shota, Tokyo 101-0021 (JP); NISHIKAWA, Chihiro, Tokyo 101-0021 (JP)
(74) Representative: Müller-Boré & Partner Patentanwälte PartG mbB
(86) International application number: PCT/JP2023/019933
(87) International publication number: WO 2024/014144

(57) **Abstract**

There is provided a method for recovering valuable materials from lithium ion secondary batteries, which includes: a heat-treatment step of performing a heat treatment on a lithium ion secondary battery to obtain a heat-treated product; a first classification step of classifying a crushed product, which is obtained by crushing the heat-treated product, at a classification point of 600 µm or greater and 2,400 µm or less to obtain a coarse-particle product 1 and a small-particle product; a grinding step of grinding the small-particle product to obtain a ground product; a second classification step of classifying the ground product at one or more classification points that are smaller than the classification point of the first classification step and are 75 µm or greater and 1,200 µm or less to obtain a coarse-particle product 2 and a fine-particle product 1; and a magnetic separation step of sorting the fine-particle product 1 obtained in the second classification step using magnetic force.

## Description

### TECHNICAL FIELD

The present invention relates to methods for recovering valuable materials from lithium ion secondary batteries.

### BACKGROUND ART

Lithium ion secondary batteries are secondary batteries which are lighter in weight, higher in capacity, and higher in electromotive force than conventional lead storage batteries, nickel-cadmium secondary batteries, and the like available in the related art. Lithium ion secondary batteries are used as secondary batteries for personal computers, electric vehicles, portable devices, and the like. For example, valuable materials, such as cobalt, nickel, and the like, are used as lithium cobalt oxide (LiCoO₂), a ternary positive-electrode material (LiNiₓCo_{y}Mn_{z}O₂ (x + y + z = 1)), and the like in a positive electrode of a lithium ion secondary battery.

Since use of lithium ion secondary batteries is expected to increase in the future, it is desired to recover valuable materials, such as lithium and the like, from defective lithium ion secondary batteries produced during production processes, or lithium ion secondary batteries discarded due to end of the service life of devices using the batteries or end of the service life of the batteries in view of recycling of resources. When valuable materials, such as lithium and the like, are recovered from lithium ion secondary batteries, it is important to separately recover various metals and impurities used in the lithium ion secondary batteries for increasing values of recovered products.

As a method of recovering valuable materials, such as cobalt, nickel, copper, and the like, from a crushed product of a heat-treated product of a lithium ion secondary battery, for example, there is proposed a method for recovering valuable materials from lithium ion secondary batteries, in which a heat-treated product obtained by performing a heat treatment on a lithium ion secondary battery is crushed, and classified in two stages, followed by performing a dry magnetic separation step multiple times (see, for example, Patent Document 1).

Moreover, there is proposed a method of recovering valuable materials, in which a heat-treated product of a lithium ion secondary battery is crushed to obtain a crushed product, the crushed product is classified to obtain a small-particle product, the small-particle product is immersed in water to form water leaching slurry, and wet magnetic separation is performed on the water leaching slurry (see, for example, Patent Document 2).

### CITATION LIST

### PATENT DOCUMENTS

Patent Document 1: Japanese Unexamined Patent Application Publication No. 2020-61297
Patent Document 2: International Publication No. WO2021/182451

### SUMMARY OF THE INVENTION

### TECHNICAL PROBLEM

However, in the method of recovering valuable materials disclosed in Patent Document 1, a cobalt (Co) content and a nickel (Ni) content of the small-particle product are low, and a grade of copper recovered as a non-magnetic material cannot be increased. Moreover, Co and Ni, which are finely crushed in a crushing step, may pass through a sieve and be included in a small-particle product obtained in the classification step of the second stage, and therefore there is a problem that desired recovery of Co and Ni cannot be achieved.

In Patent Document 2, cobalt and nickel may be attached to copper included in the small-particle product, and therefore there is a problem that high grade cobalt and nickel may not be recovered at a high recovery rate.

The present invention can solve the above various problems existing in the related art and achieve the following object. Specifically, an object of the present invention is to provide a method for recovering valuable materials from lithium ion secondary batteries, which can recover high-grade cobalt and nickel at a high recovery rate, particularly recovering high-grade cobalt and nickel at a high recovery rate even from battery packs or modules serving as a processing target.

### SOLUTION TO PROBLEM

Means for solving the above problems are as follows.
<1> A method for recovering valuable materials from lithium ion secondary batteries, the method including:
   a heat-treatment step of performing a heat treatment on a lithium ion secondary battery to obtain a heat-treated product;
   a first classification step of classifying a crushed product, which is obtained by crushing the heat-treated product, at a classification point of 600 µm or greater and 2,400 µm or less to obtain a coarse-particle product 1 and a small-particle product;
   a grinding step of grinding the small-particle product to obtain a ground product;
   a second classification step of classifying the ground product at one or more classification points that are smaller than the classification point of the first classification step and are 75 µm or greater and 1,200 µm or less to obtain a coarse-particle product 2 and a fine-particle product 1; and
   a magnetic separation step of sorting the fine-particle product 1 obtained in the second classification step using magnetic force.
<2> The method for recovering the valuable materials from the lithium ion secondary batteries according to <1>,
   wherein the grinding of the grinding step is grinding in a manner such that a mass percentage of the fine-particle product 1 relative to a total mass of the coarse-particle product 2 and the fine-particle product 1 obtained in the second classification step is 85% by mass or greater.
<3> The method for recovering the valuable materials from the lithium ion secondary batteries according to <2>,
   wherein in the second classification step, when the mass percentage of the fine-particle product 1 relative to the total mass of the coarse-particle product 2 and the fine-particle product 1 is less than 85% by mass, the coarse-particle product 2 is returned to the grinding step.
<4> The method for recovering the valuable materials from the lithium ion secondary batteries according to <1> or <2>,
   wherein copper is recovered from the coarse-particle product 2.
<5> The method for recovering the valuable materials from the lithium ion secondary batteries according to <1>,
   wherein the second classification step includes classifying of the ground product at two or more classification points that are smaller than the classification point of the first classification step and are 75 µm or greater and 1,200 µm or less to obtain a coarse-particle product 3, an intermediate-particle product, and a fine-particle product 2, and
   the magnetic separation step includes sorting of the fine-particle product 2 obtained in the second classification step using magnetic force.
<6> The method for recovering the valuable materials from the lithium ion secondary batteries according to <5>,
   wherein the grinding of the grinding step is grinding in a manner such that a mass percentage of the fine-particle product 2 relative to a total mass of the coarse-particle product 3, the intermediate-particle product, and the fine-particle product 2 obtained in the second classification step is 85% by mass or greater.
<7> The method for recovering the valuable materials from the lithium ion secondary batteries according to <6>,
   wherein in the second classification step, when the mass percentage of the fine-particle product 2 relative to the total mass of the coarse-particle product 3, the intermediate-particle product, and the fine-particle product 2 obtained in the second classification step is less than 85% by mass, the intermediate-particle product is returned to the grinding step.
<8> The method for recovering the valuable materials from the lithium ion secondary batteries according to <5>,
   wherein copper is recovered from the coarse-particle product 3.
<9> The method for recovering the valuable materials from the lithium ion secondary batteries according to <1> or <2>,
   wherein the grinding step, the second classification step, and the magnetic separation step are performed in a wet process.

### EFFECTS OF INVENTION

According to the present invention, the above various problems existing in the related art can be solved, and a method for recovering valuable materials from lithium ion secondary batteries, which can recover high-grade cobalt and nickel at a high recovery rate, can be provided.

### BRIEF DESCRIPTION OF DRAWING

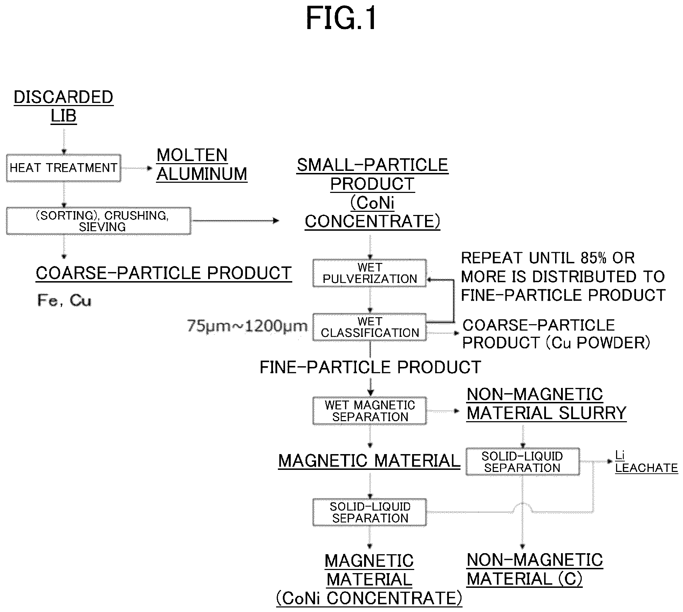

[Fig. 1] Fig. 1 is a diagram illustrating an example of a process flow of the method for recovering valuable materials from lithium ion secondary batteries of the present invention.

### DESCRIPTION OF EMBODIMENTS

### (Method for recovering valuable materials from lithium ion secondary batteries)

The method for recovering the valuable materials from the lithium ion secondary batteries of the present invention includes a heat-treatment step, a first classification step, a grinding step, a second classification step, and a magnetic separation step, and may further include other steps, as necessary.

The method for recovering the valuable materials from the lithium ion secondary batteries is a method of recovering valuable materials from a lithium ion secondary battery serving as a processing target.

In the present specification, the valuable materials encompass materials having trading values and are not to be discarded, and examples of such materials include various metals. Examples of the valuable materials in the lithium ion secondary battery include copper (Cu), aluminum (Al), lithium (Li), cobalt (Co), nickel (Ni), iron (Fe), carbon (C), and the like.

### <Lithium ion secondary battery>

The lithium ion secondary battery serving as a processing target is not particularly limited, and may be appropriately selected according to the intended purpose. Examples of the lithium ion secondary battery serving as a processing target include: defective lithium ion secondary batteries produced during the production of lithium ion secondary batteries; lithium ion secondary batteries discarded due to failures in the devices using the lithium ion secondary batteries or the end of life of the devices using the lithium ion secondary batteries; used lithium ion secondary batteries discarded due to the end of life; and the like.

A shape, structure, size, and material of the lithium ion secondary battery are not particularly limited, and may be appropriately selected according to the intended purpose.

The shape of the lithium ion secondary battery is not particularly limited, and may be appropriately selected according to the intended purpose. Examples of the shape of the lithium ion secondary battery include laminate shapes, cylindrical shapes, button shapes, coin shapes, square shapes, flat shapes, and the like.

Moreover, a form of the lithium ion secondary battery is not particularly limited, and may be appropriately selected according to the intended purpose. Examples of the form of the lithium ion secondary battery include battery cells, battery modules, battery packs, and the like. The battery module encompasses a product in which battery cells serving as unit cells are connected and collectively housed in a housing. The battery pack is a product in which the battery modules are collectively housed in a housing. Moreover, the battery pack may include a controller or a cooling device.

The lithium ion secondary battery is, for example, a lithium ion secondary battery including a positive electrode, a negative electrode, a separator, an electrolytic solution including an electrolyte and an organic solvent, and an outer container accommodating the positive electrode, the negative electrode, the separator, and the electrolytic solution including the electrolyte and the organic solvent, and the like. The lithium ion secondary battery may be in the state in which the positive electrode, the negative electrode, and the like are detached.

### -Positive electrode-

The positive electrode is not particularly limited, as long as the positive electrode includes a positive-electrode active material including cobalt, nickel, or both. The positive electrode may be appropriately selected according to the intended purpose.

A shape of the positive electrode is not particularly limited, and may be appropriately selected according to the intended purpose. Examples of the shape of the positive electrode include flat plate shapes, sheet shapes, and the like.

### --Positive-electrode current collector--

A shape, structure, size, material, and the like of the positive-electrode current collector are not particularly limited, and may be appropriately selected according to the intended purpose.

Examples of the shape of the positive-electrode current collector include foil shapes and the like.

Examples of the material of the positive-electrode current collector include stainless steel, nickel, aluminum, copper, titanium, tantalum, and the like. Among the above materials, aluminum is preferred.

A positive electrode material is not particularly limited, and may be appropriately selected according to the intended purpose. Examples of the positive electrode material include a positive electrode material that includes at least a positive-electrode active material including lithium, and optionally further includes a conductive agent and a binder resin, and the like.

The positive-electrode active material is not particularly limited, as long as the positive-electrode active material includes cobalt, nickel, and both, and may be appropriately selected according to the intended purpose.

Examples of the positive-electrode active material include lithium manganese oxide (LiMn₂O₄) referred to as LMO, lithium cobalt oxide (LiCoO₂) referred to as LCO, LiNiₓCo_{y}Mn_{z}O₂ (x + y + z = 1) referred to as ternary materials or NCM, LiNiₓCo_{y}Al_{z} (x + y + z = 1) referred to as NCA, lithium iron phosphate (LiFePO₄), lithium cobalt nickel oxide (LiCo_{1/2}Ni_{1/2}O₂), lithium titanium oxide (Li₂TiO₃), and the like. Moreover, as the positive electrode active material, the above materials may be used in combination.

The conductive agent is not particularly limited, and may be appropriately selected according to the intended purpose. Examples of the conductive agent include carbon black, graphite, carbon fibers, metal carbide, and the like.

The binder resin is not particularly limited, and may be appropriately selected according to the intended purpose. Examples of the binder resin include: homopolymers or copolymers of vinylidene fluoride, ethylene tetrafluoride, acrylonitrile, ethylene oxide, and the like; styrene-butadiene rubber; and the like.

### -Negative electrode-

The negative electrode is not particularly limited, as long as the negative electrode includes a negative-electrode active material. The negative electrode may be appropriately selected according to the intended purpose.

A shape of the negative electrode is not particularly limited, and may be appropriately selected according to the intended purpose. Examples of the shape of the negative electrode include flat plate shapes, sheet shapes, and the like.

### --Negative-electrode current collector--

A shape, structure, size, material, and the like of the negative-electrode current collector are not particularly limited, and may be appropriately selected according to the intended purpose.

Examples of the shape of the negative-electrode current collector include foil shapes, and the like.

Examples of the material of the negative-electrode current collector include stainless steel, nickel, aluminum, copper, titanium, tantalum, and the like. Among the above materials, copper is preferred.

The negative-electrode active material is not particularly limited, and may be appropriately selected according to the intended purpose. Examples of the negative-electrode active material include: carbon materials, such as graphite, hard carbon, and the like; titanate; silicon; and the like. As the negative-electrode active material, the above materials may be used in combination.

Each of the positive-electrode current collector and the negative-electrode current collector has a laminate structure. The laminate is not particularly limited, and may be appropriately selected according to the intended purpose.

### -Outer container-

A material of the outer container (housing) of the lithium ion secondary battery is not particularly limited, and may be appropriately selected according to the intended purpose. Examples of the material include aluminum, iron, stainless steel, resins (plastics), and the like.

Each of the steps in the method for recovering the valuable materials from the lithium ion secondary batteries will be described in detail hereinafter.

### <Heat-treatment step>

The heat-treatment step is a process of performing a heat treatment on a lithium ion secondary battery to obtain a heat-treated product. The heat-treated product (roasted product) encompasses a product obtained by performing a heat treatment on a lithium ion secondary battery.

A method of performing the heat treatment in the heat-treatment step is not particularly limited, and may be appropriately selected according to the intended purpose. For example, the heat treatment can be performed by heating a processing target in a roasting furnace available in the related art.

The roasting furnace is not particularly limited, and may be appropriately selected according to the intended purpose. Examples of the roasting furnace include rotary kilns, fluidized bed furnaces, tunnel kilns, batch-type furnaces (e.g., Muffle furnaces), cupola furnaces, stoker furnaces, and the like.

The atmosphere used for the heat treatment is not particularly limited, and may be appropriately selected according to the intended purpose. Examples of the atmosphere include an ambient atmosphere, an inert atmosphere, a reducing atmosphere, a low oxygen atmosphere, and the like.

The ambient atmosphere (air atmosphere) encompasses the atmosphere using the atmospheric gas (air) including approximately 21% by volume of oxygen and approximately 78% by volume of nitrogen.

Examples of the inert atmosphere include an atmosphere composed of nitrogen or argon.

The reducing atmosphere encompasses, for example, an atmosphere in which CO, H₂, H₂S, SO₂, and the like are included in an inert atmosphere of nitrogen, argon, or the like.

The low oxygen atmosphere encompasses an atmosphere including 11% by volume or less of oxygen.

Conditions (heat treatment conditions) for performing the heat treatment (heating) on a processing target of the heat treatment are not particularly limited, as long as the conditions enable each of the constituent components of the processing target to be separated and become crushable in the below-described crushing and classification steps. The heat treatment conditions may be appropriately selected according to the intended purpose.

Examples of the heat treatment conditions include a heat treatment temperature, duration of the heat treatment, and the like.

The heat treatment temperature encompasses a temperature of the lithium ion secondary battery serving as a processing target of the heat treatment. The heat treatment temperature can be measured by inserting a thermometer, such as a thermocouple, a thermistor, or the like, into the processing target during the heat treatment.

The temperature during the heat treatment (the heat treatment temperature) is preferably 750°C or higher, more preferably 750°C or higher and 1,080°C or lower, and particularly preferably 750°C or higher and 900°C or lower. By setting the heat treatment temperature at 750°C or higher, lithium, such as Li(Ni/Co/Mn)O₂ included in the positive-electrode active material or LiPF₆ in the electrolyte can be transformed into a lithium substance that can be soluble in an aqueous solution, such as lithium fluoride (LiF), lithium carbonate (Li₂CO₃), lithium oxide (Li₂O), or the like, so that lithium can be separated from impurities excluding fluoride during leaching. By setting the heat treatment temperature at 750°C or higher, moreover, cobalt oxide and nickel oxide included in the positive-electrode active material can be reduced to metals. In addition, the above metals can be grown to particle size with which the metals can be easily separated by magnetic attraction during magnetic separation that is a subsequent process.

Moreover, a material having a melting point higher than the heat treatment temperature is preferably used for the outer container of the lithium ion secondary battery.

In the case where a material having a melting point lower than the heat treatment temperature is used for the outer container of the lithium ion secondary battery, the heat treatment is preferably performed in a low oxygen atmosphere having an oxygen concentration of 11% by volume or lower, or in such manner that an oxygen concentration at least inside the lithium-ion secondary battery during roasting (particularly, around the positive-electrode current collector and the negative-electrode current collector disposed inside the outer container of the lithium-ion secondary battery) is to be 11% by volume or less.

As a method for achieving the low oxygen atmosphere, for example, the positive electrode or the negative electrode of the lithium ion secondary battery may be placed in an oxygen-shielding container, and the oxygen-shielding container is then subjected to the heat treatment. A material of the oxygen-shielding container is not particularly limited, as long as the material is a material having a melting point equal to or higher than the heat treatment temperature, and may be appropriately selected according to the intended purpose. In the case where the heat treatment temperature is 800°C, examples of the material of the oxygen-shielding container include iron, stainless steel, and the like.

In order to release the gas pressure generated by combustion of the electrolytic solution in the lithium ion secondary battery or laminate, an opening is preferably formed in the oxygen-shielding container. An area of the opening is preferably 12.5% or less relative to a surface area of the outer container in which the opening is formed. The area of the opening is more preferably 6.3% or less relative to the surface area of the outer container in which the opening is formed. A shape, size, location, and the like of the opening are not particularly limited, and may be appropriately selected according to the intended purpose.

Duration of the heat treatment of the lithium ion secondary battery is not particularly limited, and may be appropriately selected according to the intended purpose. The duration of the heat treatment is preferably 1 minute or longer and 5 hours or shorter, and more preferably 1 minute or longer and 3 hours or shorter. Duration of the heat treatment can be duration of the heat treatment during which the lithium ion secondary battery reaches a desired temperature at which metal reduction of the cobalt and the nickel occurs. The retention time may be set to secure a period during which metal reduction progresses. The preferred range of the duration of the heat treatment is advantageous in view of cost of the heat treatment.

Therefore, the heat treatment is preferably performed for 1 hour or longer at 750°C or higher and 1,200°C or lower.

### <First classification step (crushing step)>

The first classification step (crushing step) includes a process of crushing the heat-treated product to obtain a crushed product.

The crushing step is not particularly limited, as long as the heat-treated product (roasted product) is crushed to obtain a crushed product. The crushing step may be appropriately selected according to the intended purpose. Moreover, the crushed product encompasses a product obtained by crushing the heat-treated product.

The crushing step preferably includes crushing of the heat-treated product by impact to obtain a crushed product. In the case where the outer container of the lithium ion secondary battery does not melt during the heat treatment, the heat-treated product is preferably cut by a cutting device to precrush the heat-treated product before applying impact force to the heat-treated product.

Examples of a method of crushing by impact include: a method in which the heat-treated product is thrown at a collision plate using a rotating striking plate to thereby apply impact force to the heat-treated product; and a method in which the heat-treated product is beaten by a rotating hitting element (beater). For example, the above methods can be carried out by a hammer crusher or the like. Moreover, the method of crushing by impact may be, for example, a method of beating the heat-treated product with balls of a ceramic or the like. The above method can be performed by a ball mill or the like. Further, the method of crushing by impact may be performed, for example, by using a twin-screw crusher having a short blade width or blade length, or the like, which performs crushing by compression.

In addition, examples of the method of crushing by impact include a method in which the heat-treated product is beaten by rotating two chains to apply impact force to the heat-treated product and the like. The above method can be performed, for example, by a chain mill or the like.

When the heat-treated product is crushed by impact, crushing of the positive-electrode current collector (e.g., aluminum (Al)) is facilitated, but the negative-electrode current collector (e.g., copper (Cu)) whose form has not been changed significantly remains in a film form or the like. Therefore, the negative-electrode current collector is merely cut in the first classification step (crushing step). As described above, the crushed product can be obtained in the state in which a valuable material (e.g., aluminum) derived from the positive-electrode current collector and a valuable material derived from the negative-electrode current collector (e.g., copper (Cu)) can be efficiently separated in the below-described first classification step (classification step).

Duration of crushing in the crushing step is not particularly limited, and may be appropriately selected according to the intended purpose. The duration of the crushing per 1 kg of the lithium ion secondary battery is preferably 1 second or longer and 30 minutes or shorter, more preferably 2 seconds or longer and 10 minutes or shorter, and particularly preferably 3 seconds or longer and 5 minutes or shorter.

### <First classification step (classification step)>

The first classification step (classification step) is a process of classifying the crushed product, which is obtained by crushing the heat-treated product, at a classification point of 600 µm or greater and 2,400 µm or less, preferably classifying at a classification point of 850 µm or greater and 1,700 µm, to obtain a coarse-particle product 1 and a small-particle product.

The first classification step (classification step) is not particularly limited, as long as the crushed product is classified into the coarse-particle product 1 (oversize product) and the small-particle product (undersize product). The first classification step (classification step) may be appropriately selected according to the intended purpose.

The classification method is not particularly limited, and may be appropriately selected according to the intended purpose. For example, the classification method can be performed by a vibration sieve, a multistage vibration sieve, a cyclone, a standard sieve of JIS Z8801, a wet vibration table, an air table, or the like. By the classification, copper (Cu), iron (Fe), and the like can be separated as the coarse-particle product, and lithium, cobalt, nickel, or carbon can be concentrated in the small-particle product.

As a particle size of the classification (classification point or opening size of a sieve), the classification is performed at the classification point of 600 µm or greater and 2,400 µm or less from the viewpoint of separation of copper (Cu), iron (Fe), aluminum (Al), and the like as the coarse-particle product, and concentration of carbon (C), lithium (Li), cobalt (Co), nickel (Ni), manganese (Mn), and the like in the small-particle product.

In the case where a sieve is used as the classification method, classification is performed, for example, with stainless steel balls or alumina balls serving as a crush accelerator placed on the sieve, thereby separating a small crushed product, which is attached to a large crushed product, from the large crushed product. Thus, the large crushed product and the small crushed product can be efficiently separated from each other. In this manner, a grade of recovered metals can be further improved.

As described above, the crushing step can be carried out simultaneously with the classification step in the first classification step. For example, a crushing and classification step (crushing and classification) may be performed. In the crushing and classification step (crushing and classification), while crushing the heat-treated product obtained in the heat-treatment step, the crushed product is classified into a coarse-particle product and a small-particle product.

In the case where a ratio of the small-particle product is low in the first classification step (classification step), the coarse-particle product 1 may be returned to the process of crushing the heat-treated product. Thus, a recovery rate of valuable materials excluding Fe and Cu can be improved.

### <Grinding step>

The grinding step is a process of grinding the small-particle product obtained in the first classification step (classification step) to obtain a ground product having a predetermined size. Specifically, examples of the grinding step include the following (1) and (2).

(1) The grinding method in the grinding step is a method of obtaining a ground product, in which a mass percentage of a fine-particle product 1 relative to a total mass of a coarse-particle product 2 and the fine-particle product 1, which are obtained in the below-described second classification step (1), is 85% by mass or greater. The above grinding method can increase a recovery rate of cobalt (Co) and nickel (Ni) in the ground product.
   When the mass percentage of the fine-particle product 1 relative to the total mass of the coarse-particle product 2 and the fine-particle product 1, which are obtained in the below-described second classification step (1), is less than 85% by mass, the coarse-particle product 2 is returned to the grinding step, and grinding can be repeated until the mass percentage of the fine-particle product 1 relative to the total mass of the coarse-particle product 2 and the fine-particle product 1 becomes 85% by mass or greater.
(2) The grinding method in the grinding step is a method of obtaining a ground product, in which a mass percentage of a fine-particle product 2 relative to a total mass of a coarse-particle product **3,** an intermediate-particle product, and the fine-particle product 2, which are obtained in the below-described second classification step (2), is 85% by mass or greater. The above grinding method can increase a recovery rate of cobalt (Co) and nickel (Ni) in the ground product.
   When the mass percentage of the fine-particle product 2 relative to the total mass of the coarse-particle product 3, the intermediate-particle product, and the fine-particle product 2, which are obtained in the below-described second classification step (2), is less than 85% by mass, the intermediate-particle product is returned to the grinding step, and grinding can be repeated until the mass percentage of the fine-particle product 2 relative to the total mass of the coarse-particle product 3, the intermediate-particle product, and the fine-particle product 2 becomes 85% by mass or greater.

The grinding step is not particularly limited, as long as the ground product can be ground to the above-mentioned sizes. The grinding step may be appropriately selected according to the intended purpose. For example, the grinding step can be performed by a media-stirring grinder (e.g., an attritor, a bead mill, and a tower mill) using media, such as iron balls or the like, a roller mill, a jet mill, a high-speed rotation grinder (e.g., a hammer mill and a pin mill), a container-driven mill (e.g., a rotary mill, a vibration mill, a planetary mill), or the like.

The grinding step may be performed in a wet process or a dry process, and may be appropriately selected according to the intended purpose. The grinding step is preferably performed in a wet process (wet grinding step). Since the grinding step is performed in a wet process, the reduction in the actual yield of Co and Ni due to generation of dust in each process can be minimized so that it is not necessary to provide a system for preventing scattering of dust into the surrounding atmosphere. In the case where wet grinding is performed, a slurry formation step is preferably performed. In the slurry formation step, the small-particle product obtained after the first classification step is immersed in water to form a fluid in the form of slurry (small-particle product slurry).

The slurry formation step is not particularly limited, as long as the slurry formation step is a process in which the small-particle product recovered by the crushing and classification step is immersed in water (immersed or added to water) to disperse the small-particle product in the water, thereby obtaining slurry (a suspension liquid). The slurry formation step may be appropriately selected according to the intended purpose.

A dispersion medium used to form the small-particle product into slurry is not particularly limited, and may be appropriately selected according to the intended purpose. Examples of the dispersion medium include pure water and ultrapure water, such as industrial water, tap water, ionexchanged water, ultrafiltered water, reverse osmosis water, distilled water, and the like.

A leaching method in a water leaching step is not particularly limited, and may be appropriately selected according to the intended purpose. Examples of the leaching method include: a method in which the small-particle product is simply added to water; a method in which the small-particle product is added to water and stirred; a method in which the small-particle product is added to water and gently stirred while applying ultrasonic waves; a method in which water is added to the small-particle product; and the like. The leaching method is preferably, for example, a method in which the small-particle product is added to water and stirred, and more preferably a method in which the small-particle product is added to water and gently stirred while applying ultrasonic waves.

A solid-liquid ratio (a mass percentage of the small-particle product relative to water) in the water leaching step is not particularly limited, and may be appropriately selected according to the intended purpose. The solid-liquid ratio is preferably 1% or greater and 40% or less, and particularly preferably 5% or greater and 20% or less. When the solid-liquid ratio is less than 1%, cobalt and nickel, which are inherently recovered as a magnetic material, are not recovered by a magnetic separator and lost to a non-magnetic material, and therefore a recovery rate of the cobalt and nickel is more likely to decrease. When the solid-liquid ratio is greater than 40%, an amount of impurities collected together with the magnetic material increases, which may lower the grade of the cobalt and the nickel.

A speed for stirring water in the water leaching step is not particularly limited, and may be appropriately selected according to the intended purpose. For example, the speed for stirring water can be 200 rpm.

Duration of the leaching in the water leaching step is not particularly limited, and may be appropriately selected according to the intended purpose. For example, the duration of the leaching can be 1 hour.

### <Second classification step>

The second classification step is a process of classifying the ground product obtained in the grinding step at one or more classification points. Specific examples of the second classification step include the following (1) and (2).

(1) The second classification step is a process of classifying the ground product obtained in the grinding step (1) at a classification point, which is smaller than the classification point of the first classification step and is 75 µm or greater and 1,200 µm or less, to obtain a coarse-particle product 2 and a fine-particle product 1.
   In the case where a mass percentage of the fine-particle product 1 relative to the total mass of the coarse-particle product 2 and the fine-particle product 1 obtained in the second classification step (1) is less than 85% by mass, the coarse-particle product 2 is returned to the grinding step, and grinding can be repeatedly performed until the mass percentage of the fine-particle product 1 relative to the coarse-particle product 2 and the fine-particle product 1 becomes 85% by mass or greater.
   In the case where the second classification step is performed on the ground product obtained in the grinding step (1) with a standard sieve of JIS Z8801 having a classification point of 500 µm, for example, an oversize product of the standard sieve having the classification point of 500 µm is the coarse-particle product 2, and an undersize product is the fine-particle product 1. Note that, copper is concentrated in and recovered from the coarse-particle product 2.
(2) The second classification step is a process of classifying the ground product obtained in the grinding step (2) at two or more classification points, which are smaller than the classification point of the first classification step and are 75 µm or greater and 1,200 µm or less, to obtain a coarse-particle product 3, an intermediate-particle product, and a fine-particle product 2.

In the case where a mass percentage of the fine-particle product 2 relative to a total mass of the coarse-particle product 3, the intermediate-particle product, and the fine-particle product 2 obtained in the second classification step (2) is less than 85% by mass, the intermediate-particle product is returned to the grinding step, and grinding can be repeated until the mass percentage of the fine-particle product 2 relative to the total mass of the coarse-particle product 3, the intermediate-particle product, and the fine-particle product 2 becomes 85% by mass or greater.

The second classification step (2) is performed at two or more classification points.

For example, the ground product can be classified simultaneously at a first classification point of 300 µm or greater and less than 1,200 µm and a second classification point that is smaller than the first classification point and is 75 µm or greater and less than 600 µm. As a result, the coarse-particle product 3 that is greater than the first classification point, the intermediate-particle product that is smaller than the first classification point and is greater than the second classification point, and the fine-particle product 2 that is smaller than the second classification point are obtained.

Moreover, the second classification step can be performed on the ground product obtained in the grinding step (2), for example, using two standard sieves of JIS Z8801 having classification points of 500 µm and 250 µm, respectively. In this case, by sieving the ground product with the standard sieve having the classification point of 500 µm, the coarse-particle product is obtained as an oversize product that is greater than 500 µm, and the intermediate product (including the intermediate-particle product and the fine-particle product 2) is obtained as an undersize product. Subsequently, the intermediate product is sieved with the standard sieve having the classification point of 250 µm, thereby obtaining the intermediate-particle product as an oversize product that is greater than 250 µm, and the fine-particle product 2 as an undersize product that is equal to or less than 250 µm.

Note that copper can be concentrated in and recovered from the coarse-particle product 3.

The one or more classification points used in the second classification step are smaller than the classification point of the first classification step, and are 75 µm or greater and 1,200 µm or less, preferably 106 µm or greater and 850 µm or less, and particularly preferably 150 µm or greater and 600 µm or less. When the one or more classification points are greater than 1,200 µm, an amount of copper included in the fine-particle product 1 or the fine-particle product 2 is increased, thereby lowering the grade of cobalt and nickel. When the one or more classification points are lower than 75 µm, significantly large grinding energy may be required for collecting cobalt and nickel in the fine-particle product 1 or the fine-particle product 2.

The second classification step is not particularly limited, and may be appropriately selected according to the intended purpose. Examples of the second classification step include a vibration sieve, a multistage vibration sieve, a cyclone, a standard sieve of JIS Z8801, a wet vibration table, an air table, and the like.

The second classification step is not particularly limited, and may be appropriately selected according to the intended purpose. The second classification step is preferably performed in a wet process. In the case where wet classification is performed, the ground product slurry obtained in the wet grinding step may be supplied as it is, or water may be added to the ground product slurry to dilute the grinding product slurry, thereby adjusting the solid-liquid ratio.

### <Magnetic separation step>

The magnetic separation step is a process of sorting the fine-particle product 1 or the fine-particle product 2 obtained in the second classification step using magnetic force. The magnetic separation step may be dry magnetic separation or wet magnetic separation. The magnetic separation step is preferably wet magnetic separation in view of the following points.

When magnetic separation of the fine-particle product 1 or the fine-particle product 2 obtained in the second classification step is performed, for example in the case of the dry magnetic separation, moisture is deposited between particles, thereby causing aggregation of the particles. Therefore, metal particles derived from the negative-electrode current collector and the negative-electrode material particles included by an amount of 10% or greater in the fine-particle product 1 or the fine-particle product 2 may not be sufficiently separated from cobalt particles and nickel particles. For this reason, in the present invention, magnetic separation is preferably performed to separate and collect substances derived from the negative-electrode active material and metals derived from the negative-electrode current collector in non-magnetic material slurry, and recover cobalt and nickel as a magnetic material.

In the present invention, the magnetic material has a high cobalt content and a high nickel content, and moreover has a low impurity content. Therefore, the magnetic material can be used as it is as a raw material for smelting cobalt and nickel. In addition, the cost for purifying the recovered material to be used as a raw material (e.g., cobalt sulfate, nickel sulfate, etc.) for obtaining a material for producing a secondary battery can be reduced.

The magnetic separation step is a process of sorting the fine-particle product 1 or the fine-particle product 2 obtained in the second classification step into a magnetic material and a non-magnetic material.

The magnetic material encompasses a material that can be attracted toward a magnetic force source (e.g., a magnet, an electromagnet, etc.) due to attraction between the material and the magnetic force source caused by magnetic force generated by the magnetic force source. The magnetic force source is configured to generate magnetic force (magnetic field). Examples of the magnetic material include ferromagnetic metals and the like. Examples of the ferromagnetic metals include iron (Fe), nickel (Ni), cobalt (Co), and the like.

The non-magnetic material encompasses a material that is not attracted toward the magnetic force source by the magnetic force generated by the magnetic force source. The non-magnetic material is not particularly limited, and may be appropriately selected according to the intended purpose. Moreover, examples of metals that are the non-magnetic material include paramagnetic metals, semi-magnetic metals, and the like. Examples of the paramagnetic metals or the semi-magnetic metals include aluminum (Al), manganese (Mn), gold (Au), silver (Ag), copper (Cu), and the like.

The magnetic separation step is not particularly limited, and can be performed by a magnetic force sorting device (magnetic separator) available in the related art. Examples of the magnetic separator include drum magnetic separators, high gradient magnetic separators, and the like.

The magnetic field strength of the magnetic separator is not particularly limited, and may be appropriately selected according to the intended purpose. The magnetic field strength is preferably 1,000 G or greater and 40,000 G or less, more preferably 3,000 G or greater and 30,000 G or less, and particularly preferably 6,000 G or greater and 20,000 G or less. When the magnetic field strength is less than 1,000 G, cobalt and nickel may not be easily magnetically attracted, thereby a recovery rate of cobalt and nickel in the magnetic material becomes low. When the magnetic field strength is greater than 40,000 G, a ratio of impurities, which exclude cobalt and nickel, recovered in the magnetic material increases, thereby lowering the cobalt content and the nickel content in the magnetic material.

As the magnetic separation step, magnetic separation may be performed multiple times (multiple stages). For example, second-stage magnetic separation (fine selection) is performed on a magnetic material recovered by a first-stage magnetic separation step to, once again, separate and remove impurities included together with cobalt and nickel particles obtained in the first-stage magnetic separation step, thereby improving the grade of cobalt (Co) and nickel in the magnetic material.

Since the second-stage magnetic separation (cleaning separation) is performed on the non-magnetic material recovered by the first-stage magnetic separation step, cobalt and nickel that have been lost in the non-magnetic material can be recovered as a magnetic material, thereby increasing the actual yield of cobalt and nickel as a whole. The cobalt and nickel particles have a large particle size compared with carbon that is a main impurity. Since the cobalt and nickel particles, which are relatively coarse particles, are recovered in advance by the first-stage magnetic separation, the particle size of the relatively fine cobalt and nickel particles that had not been recovered by the first-stage magnetic separation and the particle size of carbon that is an impurity become similar. Therefore, an amount of impurities attached to and recovered together with the cobalt and nickel particles can be reduced, when the cobalt and nickel particles are recovered by the second-stage magnetic separation. Accordingly, it is possible to achieve better magnetic separation performance.

In the wet magnetic separation, the undersize product slurry obtained in the wet second classification step may be supplied as it is, or the undersize product slurry may be concentrated or diluted by solid-liquid separation, such as sedimentation separation or the like, to adjust a solid-liquid ratio. Moreover, water may be added to the undersize product slurry to dilute the undersize product slurry to adjust the solid-liquid ratio.

The solid-liquid ratio (mass percentage of the fine-particle product 1 or the fine-particle product 2 relative to water) of the slurry supplied to the wet magnetic separation is not particularly limited, and may be appropriately selected according to the intended purpose. The solid-liquid ratio is preferably 5% or greater and 67% or less, and more preferably 10% or greater and 40% or less. When the solid-liquid ratio is less than 5%, a recovery rate of cobalt and nickel as a magnetic material in a wet magnetic separator may be reduced. When the solid-liquid ratio is greater than 67%, a problem, such as blockage of a pump during supply of the slurry, tends to occur, and the separation performance of cobalt and nickel (magnetic material) from a non-magnetic material, such as carbon, may be lowered.

A method of supplying the slurry is not particularly limited, and may be appropriately selected according to the intended purpose. The slurry may be supplied by a pump, while stirring the slurry in a tank.

Since the magnetic material recovered by the wet magnetic separation includes moisture, the moisture may be removed by performing solid-liquid separation using filter paper, a filter press, a centrifugal separator, or the like, air drying, or heating and drying by a drier.

The non-magnetic material slurry includes lithium aluminate (LiAlO₂), carbon, copper (which has not been recovered as the coarse-particle product), and lithium (water soluble).

An acid may be added to the non-magnetic material slurry to leach lithium in lithium aluminate included in the non-magnetic material into the acid (acid leaching process), followed by performing solid-liquid separation, to thereby separate the non-magnetic material slurry into a solid and a liquid, i.e., a filtrate (acid leachate) and a filtration residue (carbon concentrate).

Calcium hydroxide (Ca(OH)₂, slaked lime) may be added to the acid leachate to neutralize (neutralization step), followed by performing solid-liquid separation by filtration using a filter press, thereby separating the acid leachate into a solid and a liquid, i.e. a liquid including lithium and a solid including impurities, such as fluorine, aluminum, or the like. Sodium carbonate (Na₂CO₃) may be added to the neutralized liquid, followed by performing solid-liquid separation by filtration using a filter press, thereby separating calcium dissolved in the neutralized liquid as calcium carbonate in a solid. The liquid including lithium is heated to evaporate and concentrate the solution, thereby recovering lithium as lithium carbonate (Li₂CO₃).

### <Other steps>

Other steps are not particularly limited, and may be appropriately selected according to the intended purpose. Examples of other processes include a liquid washing step, a drying step, a purification step, and the like.

### <One example of embodiment>

An example of an embodiment of the method for recovering valuable materials from lithium ion secondary batteries of the present invention will be described with reference to the drawing. Fig. 1 is an example illustrating a process flow of the embodiment of the method for recovering valuable materials from lithium ion secondary batteries of the present invention.

First, a heat treatment (heat-treatment step) is performed on a lithium ion secondary battery (lithium ion battery (LIB)) to obtain a heat-treated product.

Next, a crushed product, which is obtained by crushing the heat-treated product, is classified at a classification point of 1,200 µm to obtain a coarse-particle product and a small-particle product. Copper (Cu), iron (Fe) or the like can be separated from the coarse-particle product.

Subsequently, the small-particle product is immersed in water to obtain small-particle product slurry. During this process, lithium (lithium oxide or lithium carbonate) is leached into water, and a residue including nickel (Ni), cobalt (Co), manganese (Mn) is incorporated into the small-particle product slurry.

Next, the obtained small-particle product slurry is subjected to wet grinding to obtain ground product slurry.

Next, wet classification is performed on the obtained ground product slurry at a classification point of 75 µm or greater and 1,200 µm or less, thereby obtaining coarse-particle product slurry and fine-particle product slurry. The obtained coarse-particle product slurry is returned to the grinding step, and the grinding step is repeated until 85% by mass or greater of the ground product slurry is distributed to the fine-particle product slurry.

Next, wet magnetic separation is performed on the obtained fine-particle product slurry to sort the fine-particle product slurry into a magnetic material and non-magnetic material slurry. Nickel (Ni) and cobalt (Co) are included in the magnetic material.

Lithium aluminate (LiAlO₂), carbon, copper (which has not been recovered as the coarse-particle product), and lithium (water soluble) are included in the non-magnetic material slurry.

Next, acid is added to the non-magnetic material slurry to leach lithium in the lithium aluminate included in the non-magnetic material into the acid (acid leaching step), followed by performing solid-liquid separation, thereby separating the non-magnetic material slurry into a solid and a liquid, i.e., a filtrate (acid leachate) and a filtration residue (carbon concentrate).

### Examples

Examples of the present invention will be described hereinafter, but the present invention is not limited to these examples in any way.

### (Example 1)

### -Heat-treatment step-

A heat treatment was performed on a battery pack (approximately 300 kg) of a lithium ion secondary battery serving as a processing target by a batch burner furnace of EcoSystem Akita Co., Ltd. serving as a heat treatment device at a heat treatment temperature of 800°C (elevating the temperature from 20°C to 800°C over the period of 15 minutes, followed by retaining the temperature at 800°C for 2 hours) in an ambient atmosphere, to obtain a heat-treated product.

### -Crushing step-

Next, the lithium ion secondary battery, which had been subjected to the heat treatment, was crushed by a chain mill (Cross Flow Shredder S-1000, produced by SATO TEKKO CO., LTD.) serving as a crushing device at 50 Hz (chain tip speed: approximately 60 m/s) for a retention time of 50 seconds, thereby obtaining a crushed product of the lithium ion secondary battery.

Subsequently, the crushed product of the lithium ion secondary battery was sieved using a sieve having a sieve opening size of 1.2 mm (diameter: 200 mm, produced by TOKYO SCREEN CO., LTD.) to sort the crushed product. After the sieving, an oversize product (coarse-particle product) and an undersize product (small-particle product) relative to 1.2 mm were collected.

### -Slurry formation step-

The obtained small-particle product (62.5 kg) was immersed in 250 L of water to leach lithium into the water under conditions such that a solid-liquid ratio was 25%, a stirring speed was 400 rpm, and leaching duration was 1 hour, thereby obtaining small-particle product slurry.

### -Wet grinding step-

The obtained small-particle product slurry and 10 kg of grinding media (iron balls) were subjected to wet grinding for 30 minutes by a media-stirring grinder (Tower Mill NE008, produced by Nippon Eirich Co., Ltd.). For the wet grinding, the small-particle product slurry was supplied in 20 batches, and a rotational speed per batch was 716 rpm (circumferential speed: 3 m/sec).

### -Wet classification step-

Next, the obtained small-particle product slurry was subjected to wet classification using two standard sieves of JIS Z8801 having sieving classification points (opening size) of 500 µm and 250 µm, respectively.

An oversize product at the classification point of 500 µm was a coarse-particle product 3, an oversize product at the classification point of 250 µm was an intermediate-particle product, and an undersize product at the classification point of 250 µm was a fine-particle product 2.

The intermediate-particle product was returned to the grinding step and the grinding was repeated so that a mass percentage of the fine-particle product 2 relative to a total mass of the coarse-particle product 3, the intermediate-particle product, and the fine-particle product 2 became 85% by mass or greater. As the final mass percentages, the coarse-particle product 3 was 8%, the intermediate-particle product was 4%, and the fine-particle product 2 was 88%.

### -Wet magnetic separation step-

Next, the slurry including the fine-particle product 2 was subjected to wet magnetic separation at a magnetic flux density of 6,000 G using a drum magnetic separator (product name: REX WD 15 (in diameter) × 12, produced by Eriez Magnetics Japan Co., Ltd.), thereby recovering a magnetic material (containing water) and non-magnetic material slurry.

Next, the obtained magnetic material (containing water) was subjected to pressure filtration at 0.6 MPa by a filter press using a filter cloth (product name: PP934K, produced by Nakao Filter Media Corp.), thereby obtaining a magnetic material (dehydrated). The obtained magnetic material (dehydrated) was dried by a drier (product name: DRM620DD, produced by Advantec Toyo Kaisha, Ltd.) at 105°C for 24 hours, thereby obtaining a magnetic material.

### <Measurement of grade and recovery rate>

After drying the obtained magnetic material at 105°C for 1 hour, a mass of the obtained magnetic material was measured by an electromagnetic balance (product name: GX-8K, produced by A&D Company, Limited). Then, the magnetic material was dissolved in aqua regia by heating, and analyzed using a high-frequency inductively coupled plasma emission spectrometer (SPECTROGREEN FMX46, produced by Hitachi High-Tech Science Corporation) to determine a cobalt content, a nickel content, and recovery rates of cobalt and nickel.

Moreover, the oversize product (coarse-particle product 3) relative to the classification point of 500 µm obtained in the wet classification step was analyzed by a high-frequency inductively coupled plasma emission spectrometer (SPECTROGREEN FMX46, produced by Hitachi High-Tech Science Corporation) to determine a copper content of the obtained coarse-particle product 3.

### <Results>

In Example 1, the magnetic material having the cobalt content of 22% and the nickel content of 21% was obtained, the recovery rate of the cobalt was 91%, and the recovery rate of the nickel was 88%. Moreover, the copper content of the coarse-particle product 3 (oversize product relative to the classification point of 500 µm) obtained in the wet classification step was 43%.

### (Comparative Example 1)

A magnetic material of Comparative Example 1 was obtained in the same manner as in Example 1, except that the undersize small-particle product relative to the sieve of 1.2 mm was classified by a wet vibration sieve having standard sieves having classification points of 500 µm and 250 µm, respectively, without being subjected to wet grinding, and the wet magnetic separation step was performed on the undersize product relative to the classification point of 250 µm.

### <Results>

The obtained magnetic material and the oversize product relative to the classification point of 500 µm were measured in the same manner as in Example 1. As a result, the magnetic material having the cobalt content of 16% and the nickel content of 17% was obtained, the recovery rate of the cobalt was 42%, and the recovery rate of the nickel was 44%. Moreover, the copper content of the oversize product relative to the classification point of 500 µm obtained in the wet classification step was 13%.

### (Comparative Example 2)

The small-particle product recovered by the method described in Example 1 was used as an undersize product of a first-stage classification step disclosed in Example 1 of Japanese Unexamined Patent Application Publication No. 2020-61297, and subsequent steps of Example 1 of Japanese Unexamined Patent Application Publication No. 2020-61297 were reproduced, thereby obtaining a magnetic material of Comparative Example 2.

### <Results>

The obtained magnetic material was measured in the same manner as in Example 1. As a result, the magnetic material having the cobalt content of 10% and the nickel content of 9% was obtained, the recovery rate of the cobalt was 32%, and the recovery rate % of the nickel was 31%. In the small-particle product (undersize product relative to the opening size of 0.3 mm) disclosed in Japanese Unexamined Patent Application Publication No. 2020-61297, 17% of cobalt and 18% of nickel were lost. This is considered to be because the lithium ion secondary battery of the battery pack size was subjected to the heat treatment, which caused varied heat treatment temperatures within the pack, and therefore there were cobalt and nickel in part of which particle growth did not occur sufficiently.

Further, the intermediate product was subjected to magnetic separation in two stages, but 33% of cobalt and 35% of nickel were lost in the non-magnetic material obtained in the first magnetic separation and the non-magnetic material obtained in the second magnetic separation. Therefore, cobalt and nickel could not be sufficiently recovered in the magnetic material. This is considered to be because the cobalt and nickel particles which had not grown sufficiently were magnetically attracted to the hand magnet having the magnetic force of 1,500 G.

This international application is based upon and claims priority to Japanese Patent Application No. 2022-112516, filed on July 13, 2022, the entire contents of which are incorporated herein by reference.

## Claims

1. A method for recovering valuable materials from lithium ion secondary batteries, the method comprising:
a heat-treatment step of performing a heat treatment on a lithium ion secondary battery to obtain a heat-treated product;
a first classification step of classifying a crushed product, which is obtained by crushing the heat-treated product, at a classification point of 600 µm or greater and 2,400 µm or less to obtain a coarse-particle product 1 and a small-particle product;
a grinding step of grinding the small-particle product to obtain a ground product;
a second classification step of classifying the ground product at one or more classification points that are smaller than the classification point of the first classification step and are 75 µm or greater and 1,200 µm or less to obtain a coarse-particle product 2 and a fine-particle product 1; and
a magnetic separation step of sorting the fine-particle product 1 obtained in the second classification step using magnetic force.

2. The method for recovering the valuable materials from the lithium ion secondary batteries according to claim 1,
wherein the grinding of the grinding step is grinding in a manner such that a mass percentage of the fine-particle product 1 relative to a total mass of the coarse-particle product 2 and the fine-particle product 1 obtained in the second classification step is 85% by mass or greater.

3. The method for recovering the valuable materials from the lithium ion secondary batteries according to claim 2,
wherein in the second classification step, when the mass percentage of the fine-particle product 1 relative to the total mass of the coarse-particle product 2 and the fine-particle product 1 is less than 85% by mass, the coarse-particle product 2 is returned to the grinding step.

4. The method for recovering the valuable materials from the lithium ion secondary batteries according to claim 1 or 2,
wherein copper is recovered from the coarse-particle product 2.

5. The method for recovering the valuable materials from the lithium ion secondary batteries according to claim 1,
wherein the second classification step includes classifying of the ground product at two or more classification points that are smaller than the classification point of the first classification step and are 75 µm or greater and 1,200 µm or less to obtain a coarse-particle product 3, an intermediate-particle product, and a fine-particle product 2, and
the magnetic separation step includes sorting of the fine-particle product 2 obtained in the second classification step using magnetic force.

6. The method for recovering the valuable materials from the lithium ion secondary batteries according to claim 5,
wherein the grinding of the grinding step is grinding in a manner such that a mass percentage of the fine-particle product 2 relative to a total mass of the coarse-particle product 3, the intermediate-particle product, and the fine-particle product 2 obtained in the second classification step is 85% by mass or greater.

7. The method for recovering the valuable materials from the lithium ion secondary batteries according to claim 6,
wherein in the second classification step, when the mass percentage of the fine-particle product 2 relative to the total mass of the coarse-particle product 3, the intermediate-particle product, and the fine-particle product 2 obtained in the second classification step is less than 85% by mass, the intermediate-particle product is returned to the grinding step.

8. The method for recovering the valuable materials from the lithium ion secondary batteries according to claim 5,
wherein copper is recovered from the coarse-particle product 3.

9. The method for recovering the valuable materials from the lithium ion secondary batteries according to claim 1 or 2,
wherein the grinding step, the second classification step, and the magnetic separation step are performed in a wet process.
